Europäisches Patentamt

European Patent Office

Office européen des brevets

(19)

(11) Publication number:
0 336 566
A2

# EUROPEAN PATENT APPLICATION

(21) Application number: 89302320.0

(22) Date of filing: 08.03.89

(51) Int. Cl.⁴: C03B 9/353 , C03B 9/16

(30) Priority: 31.03.88 GB 8807735

(43) Date of publication of application:
11.10.89 Bulletin 89/41

(84) Designated Contracting States:
DE FR GB IT

(71) Applicant: EMHART INDUSTRIES, INC.
426 Colt Highway
Farmington Connecticut 06032(US)

(72) Inventor: Nebelung, Hermann Heinrich
Niedersachsenstrasse 51
D-2090 Winsen/Luhe(DE)
Inventor: Borgmann, Hans
Schiefer Brink 10
D-4923 Extertal(DE)

(74) Representative: Randall, John Walter et al
Emhart Patents Department Lyn House 39
The Parade
Oadby, Leicester LE2 5BB(GB)

(54) Opening and closing mechanism for the moulds of a glassware forming machine.

(57) The mould side portions (10) of a glassware forming machine are moved from open positions thereof to positions adjacent their closed positions under low pressure and then closed under high pressure. The side portions (10) are moved by the operation of a piston and cylinder assembly (32,38). A first surface (46) of the piston (38) presents a greater effective area on which fluid under pressure can act than a second surface (48) thereof, and passage means (56) are provided which allow fluid to flow past the piston (38) in one direction as the piston moves the mould portions (10) to said adjacent positions but prevents such flow during further movement to close the moulds allowing full pressure to be generated.

FIG. 3

Xerox Copy Centre

## OPENING AND CLOSING MECHANISM FOR THE MOULDS OF A GLASSWARE FORMING MACHINE.

This invention is concerned with an opening and closing mechanism for the moulds of a glassware forming machine.

In glassware forming machines of the individual section type, the moulds of each section of the machine comprise one or more blank moulds for moulding charges, known as "gobs", of molten glass into parisons, and one or more final moulds for moulding the parisons into completed glass containers. These moulds generally comprise two opposed mould side portions which, in the operation of the machine, are moved between mould closed positions thereof, in which the mould side portions engage one another and cooperate in defining a mould cavity in which a gob or parison can be moulded, and mould open positions thereof in which the mould side portions are separated from one another to allow removal of moulded parisons or containers and introduction of further gobs or parisons. In most cases, the mould side portions are moved arcuately about a common axis but, in some machines, the movement is in a straight line.

The molten glass is moulded in the blank moulds either by a pressing process in which a plunger is pressed into the mould cavity or by a blowing process and is moulded in the final moulds by a blowing process. In all cases, the mould side portions need to be held together with considerable force to prevent them from being separated by the considerable forces generated during the moulding. Conventionally, the opening and closing mechanism used to move the mould side portions as aforesaid is also used to hold them together during moulding and, thus, must generate considerable force. A conventional mould opening and closing mechanism comprises a piston and cylinder assembly comprising a cylinder, a piston movable in the cylinder, and a piston rod secured to the piston and operatively connected to the mould side portions. Such a mechanism is described in U.S. Patent Specification No. 1 911 119 in relation to Figure 8 thereof. It is also possible to utilise supplementary means for holding the mould closed, see e.g. U.S. Patent Specifications Nos. 3 528 796 and 3 460 931 and Great Britain Patent Specification No. 2 110 203 but such arrangements are complex.

As the mould opening and closing mechanism generates considerable force, it represents a hazard to machine operators and indeed is a major cause of accidents due to the operators hands becoming trapped between the mould side portions as they approach their mould closed positions. Severe hand injuries are often caused when such accidents occur.

It is an object of the present invention to provide an opening and closing mechanism for the moulds of a glassware forming machine which protects machine operators from accidents of the type referred to. According to further objects of the invention, the mechanism should not hinder access to the moulds and should not require alteration of the machine.

The invention provides an opening and closing mechanism operable to move mould side portions of a glassware forming machine between mould closed positions thereof, in which each mould side portion engages another such side portion and cooperates therewith in defining a mould cavity in which molten glass can be moulded, and mould open positions thereof in which the mould side portions are separated from one another to allow removal of moulded glass and introduction of further molten glass, the mechanism comprising a piston and cylinder assembly comprising, a cylinder, a piston moving in the cylinder between a mould open and a mould closed position and comprising a head and a piston rod, a first chamber on one side of the piston head, a second chamber on the other side of the head, the effective area of the piston head bounding the first chamber being greater than that of that bounding the second chamber, characterised in that there are provided passage means in the piston extending from an entrance opening to the first chamber to an exit opening to the second chamber, a check valve in the passage means preventing flow of fluid from the second chamber to the first, a sleeve opening into the second chamber through which the piston can slide and so arranged that on initial movement of the piston from mould open to mould closed position fluid may flow from the first chamber into the second chamber and that towards the end of such movement the exit opening to the second chamber is closed by the sleeve thus to increase the force developed on the piston.

In an opening and closing mechanism according to the last preceding paragraph, the full force is not generated until just before the mould side portions reach their mould closed positions so that an operator's hand cannot be subjected to the full force. The ratio of the areas of the first and second surfaces of the piston can be arranged so that the closing force can readily be resisted by the operator until the mould side portions reach said positions adjacent to their closed positions which can be arranged so that the gap between the mould side portions is too small to admit the operator's hand. Furthermore, the mechanism requires no additional equipment in the vicinity of the mould side portions so that access is not hindered and the mechanism can readily be installed in a conventional machine in place of a conventional mechanism as its cylinder can readily be made in the same external shape as the cylinder of a conventional mechanism.

Conveniently, the piston rod may extend from said piston throughout the cylinder in both directions, as is conventional, and the portion thereof which extends through said first chamber has a smaller diameter than the portion thereof which extends through said second chamber. Thus, the effective areas of the first and second surfaces of the piston differ by the difference in cross-sectional areas between the portions of the piston rod.

Conveniently, the passage means may comprise bores formed in the piston rod and a one-way valve arranged to prevent flow through the bores from the second chamber to the first chamber. The bores may have an entrance opening into the first chamber formed by a transverse bore in the piston rod and an exit opening into the second chamber formed by a further transverse bore in the piston rod. The passage means may also comprise sealing means, formed by a sealing ring mounted on the piston rod between the exit and the piston arranged to seal said exit when said mould side portions reach said positions adjacent to their mould closed positions by sealingly engaging the wall of a recess in an end cap of the cylinder.

There now follows a detailed description, to be read with reference to the accompanying drawings, of an opening and closing mechanism which is illustrative of the invention. It is to be understood that the illustrative mechanism has been selected for description by way of example and not of limitation of the invention.

In the drawings:

Figure 1 is a plan view of moulds opened and closed by the illustrative mechanism, showing mould side portions in their mould closed positions in full line and their mould open positions in broken line;

Figure 2 is a view similar to Figure 1 but showing the mould side portions in positions adjacent to their mould closed positions;

Figure 3 is a longitudinal cross-sectional view taken through a piston and cylinder assembly of the illustrative opening and closing mechanism showing the position of the piston when the mould side portions are halfway between their mould open and mould closed positions;

Figure 4 is a view similar to Figure 3 but showing the position of the piston when the mould side portions are in positions adjacent to their mould closed positions; and

Figure 5 is a partial view similar to Figures 3 and 4 but showing the position of the piston when the mould side portions are in their mould closed positions.

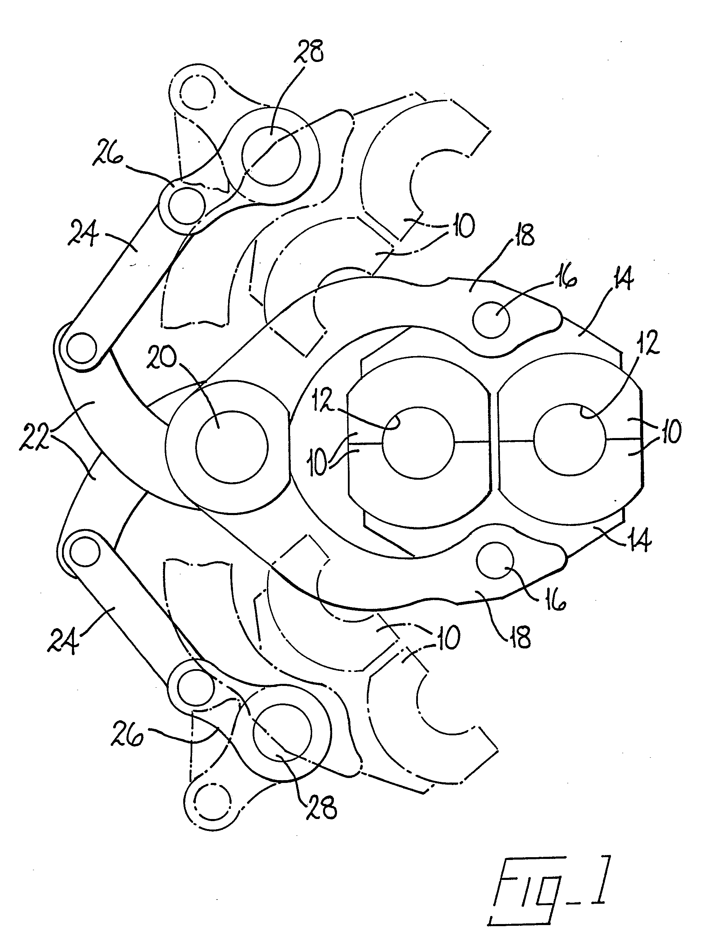

The illustrative opening and closing mechanism is operable to move mould side portions 10 of two moulds arranged side by side of a glassware forming machine of the individual section type. The side portions 10 are moved between mould closed positions thereof (shown in full line in Figure 1) in which each portion 10 engages another such portion and cooperates therewith in defining a mould cavity 12 in which molten glass can be moulded, and mould open positions thereof (shown in broken line in Figure 1) in which the portions 10 are separated from one another to allow removal of moulded glass and introduction of further molten glass. The portions 10 are mounted in pairs on supports 14 which are pivotally mounted on pins 16 supported by opposed arms 18 which are mounted in conventional manner on a common pivot pin 20. To move the portions 10 between their mould open and mould closed positions, the arms 18 are pivotally moved about the pin 20 simultaneously one clockwise and the other anti-clockwise.

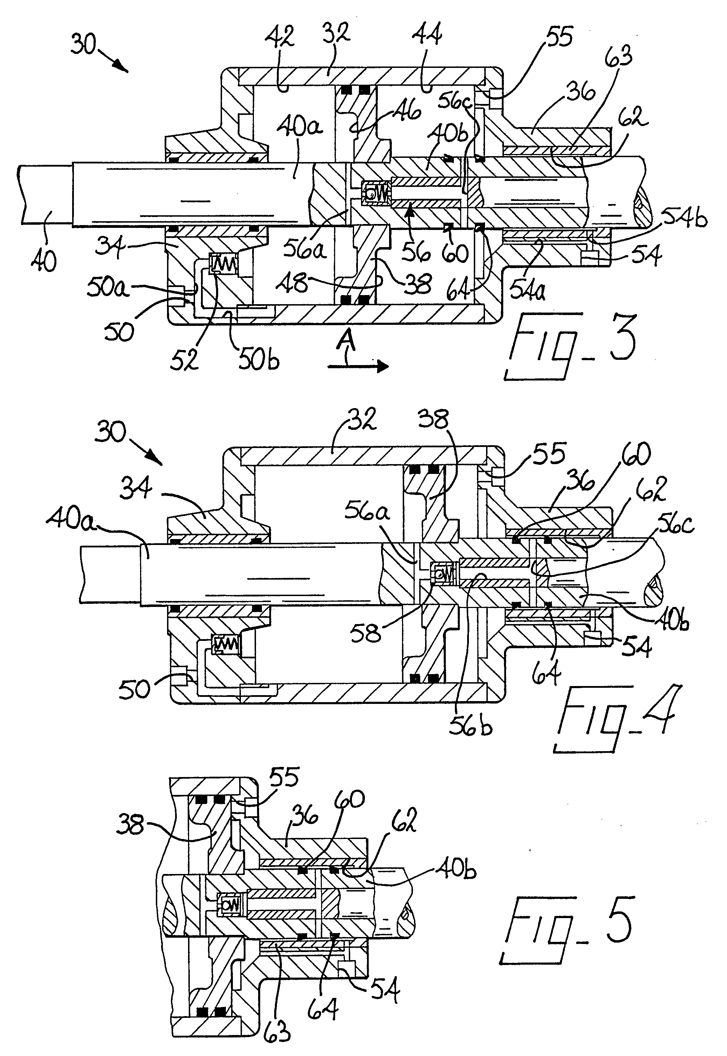

The arms 18 have extensions 22 on the opposite side of the pin 20 from the portions 10. These extensions are each pivotally connected to one of two links 24. The links 24 are pivotally connected to arms 26 each projecting horizontally from one of two vertical shafts 28 which are mounted in conventional manner to turn about their longitudinal axes. When the shafts 28 are turned about their longitudinal axes, one clockwise and the other anti-clockwise, by the operation of a piston and cylinder assembly 30 of the illustrative mechanism (Figures 3 and 4), the links 24 are moved by the arms 26 and cause the arms 18 to pivot about the pin 20, one clockwise and the other anti-clockwise, thereby moving the portions 10 as aforesaid.

The piston and cylinder assembly 30 comprises a cylinder 32, having a first end cap 34 and a second end cap 36, a piston 38 movable in the cylinder 32, and a piston rod 40 secured to the piston 38 and operatively connected to the mould side portions 10. The piston rod 40 extends throughout the cylinder 32 in both directions from the piston 38 and passes through seals in both end caps 34 and 36. The piston rod 40 is pivotally connected to a link (not shown) which is connected to a lever (not shown) mounted to turn about a vertical axis. This lever is pivotally connected to two further links (not shown) which are in turn pivotally connected to arms (not shown) which project horizontally from splined sockets (not shown) mounted to turn about horizontal axes and arranged to receive splined lower end portions of the shafts 28. These not shown items are of conventional construction and similar to those shown in Figure 8 of the aforementioned U.S. Patent Specification No. 1 911 119. The operative connection between the piston rod 40 and the portions 10 is completed by the aforementioned items 26, 24, 18, 16 and 14. When the piston 38 and the piston rod 40 are moved along the cylinder 32, the lever is caused to pivot, pivoting the sockets and the shafts 28 about the axes of the shafts 28 and causing the arms 18 to pivot about the pin 20 one clockwise and the other anti-clockwise.

The piston 38 forms a boundary between a first chamber 42 and a second chamber 44 within the cylinder 32. The first chamber 42 is bounded by a first surface 46 of the piston 38, the end cap 34 and the cylinder 32 while the second chamber 44 is bounded a second surface 48 of the piston 38 opposite to the surface 46, the end cap 36 and the cylinder 32. The chambers 42 and 44 vary in volume as the piston 38 moves in the cylinder 32.

Fluid, viz. air, under pressure can be introduced into the first chamber 42 through a port 50 in the end cap 34 which divides into two branches, a first branch 50a which passes through a check valve 52 and enters the chamber 42 from the end cap 34, and a second branch 50b which extends into the cylinder 32 before entering the chamber 42. The check valve 52 is arranged to prevent air from leaving the cylinder 32 through the branch 50a and comprises a spring-loaded closure member which is displaced against the spring pressure to allow air to enter the cylinder through the branch 50a. Introduction of such fluid into the chamber 42 causes the piston 38 to move in a first direction (indicated by the arrow A in Figure 3) to move the mould side portions 10 into their mould closed positions. Fluid under pressure can be introduced into the second chamber 44 through a port 55 in the end cap 36 and such introduction causes the piston 38 to move in a second, opposite, direction to move the mould side portions 10 into their mould open positions. The end cap 36 also defines a port 54 which divides into a branch 54a, which enters the chamber 44 in a direction parallel to the piston rod 40, and a branch 54b which enters a cylindrical recess 62 in the end cap 36 by passing radially through a bushing 63 which lines the recess 62. The port 54 is throttled (not shown) so that air pressure in the chamber 44 is limited.

The portion 40a of the piston rod 40 which extends through the first chamber 42 has a smaller diameter than the portion 40b thereof which extends through said second chamber 44. Therefore, the first surface 46 of the piston 38 presents a greater effective area on which the fluid under pressure can act than does the second surface 48 of the piston 38.

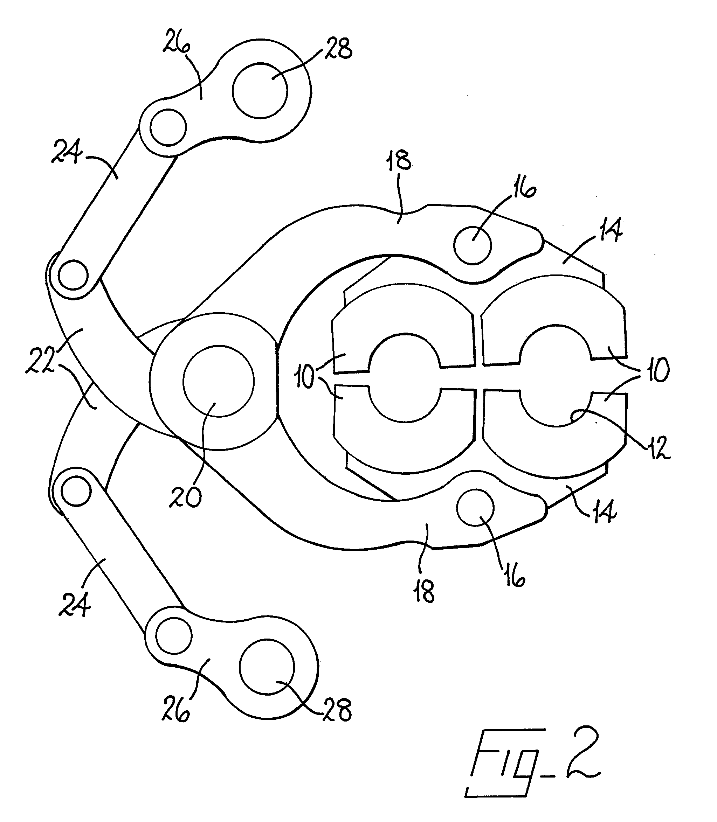

Passage means 56 are provided which allow fluid to flow from the first chamber 42 to the second chamber 44 during movement of the mould side portions 10 from their mould open positions (shown in broken line in Figure 1) to positions (shown in Figure 2) adjacent to their mould closed positions but prevent such flow during further movement of the mould side portions 10 to their mould closed positions (shown in Figure 1 in full line). The passage means 56 comprises a transverse bore 56a through the portion 40a of the piston rod providing entrances at its ends and connecting with a longitudinal bore 56b of the passage means in the piston rod 40. The bore 56b contains a one-way valve 58 arranged to prevent flow through the bores from the second chamber 44 into the first chamber 42 and connects with a transverse bore 56c in the portion 40b of the piston rod. The bore 56c provides exits at its ends opening into the chamber 44. The passage means 56 also comprises sealing means arranged to seal said exits of the bore 56c when said mould side portions 10 reach said positions adjacent to their mould closed positions. The sealing means comprises a sealing ring 60 mounted on the portion 40b of the piston rod between said exits and the piston 38. The sealing ring 60 is arranged to sealingly engage the internal wall of the bushing 63 in the recess 62 in the end cap 36 of the cylinder 32. The recess 62 is cylindrical and coaxial with the piston rod 40. A further sealing ring 64 is mounted on the piston rod portion 40b further from the piston 38 than the exits of the bore 56c and is also arranged to sealingly engage the internal wall of the bushing 63.

In the operation of the illustrative mechanism, the mould side portions 10 are moved away from their mould open positions by introducing air under pressure into the port 50 with the port 54 open and the port 55 closed. The air passes through the check valve 52 and enters the first chamber 42. The air also enters the bore 56a and flows through the bores 56a, 56b and 56c and the one-way valve 58 into the second chamber 44. Because the surface 46 of the piston 38 has a greater effective area than the surface 48 thereof, the piston 38 moves away from the end cap 34 and the mould side portions 10 move away from their mould open positions. The branch 50b of the port 50 is uncovered as the piston 38 moves so that the air flow is increased. During this movement air can escape through the branches 54a and 54b of the port 54 which, as mentioned above, is throttled so that the air pressure in the chamber 44 cannot build up sufficiently to prevent movement of the piston 38.

The piston 38 moves towards the end cap 36 under low pressure. When the sealing ring 64 enters the bushing 63, the branch 54b is isolated from the chamber 44 and air can only leave the chamber 44 through the branch 54a so that the end of the motion is cushioned. When the mould side portions 10 reach the positions adjacent to their closed positions, the sealing ring 60 enters the bushing 63 and seals the exits of the bore 56c between the sealing rings 60 and 64. These positions can be arranged so that none of the mould side portions 10 is more than 10 mm from its mould closed position. Once the exits of the bore 56c are sealed the full force is developed on the piston 38 to close the moulds and hold them closed (Figure 5). To return the mould side portions 10 to their mould open positions, the port 55 is connected to air under pressure, the port 54 is closed and the port 50 is corrected to exhaust.

When the piston 38 approaches the end cap 34, it closes the branch 50b of the port 50 so that the end of the motion is cushioned.

## Claims

1. An opening and closing mechanism operable to move mould side portions of a glassware forming machine between mould closed positions thereof, in which each mould side portion engages another such side portion and cooperates therewith in defining a mould cavity in which molten glass can be moulded, and mould open positions thereof in which the mould side portions are separated from one another to allow removal of moulded glass and introduction of further molten glass, the mechanism comprising a piston and cylinder assembly comprising,
a cylinder 32,
a piston 38 moving in the cylinder between a mould open and a mould closed position and comprising a head 33 and a piston rod 40,
a first chamber 42 on one side of the piston head, a second chamber 44 on the other side of the head, the effective area of the piston head bounding the first chamber being greater than that of that bounding the second chamber, characterised in that there are provided passage means in the piston extending from an entrance opening 56a to the first chamber to an exit opening 56c to the second chamber,
a check valve 58 in the passage means preventing flow of fluid from the second chamber to the first,
a sleeve 63 opening into the second chamber through which the piston can slide and so arranged that on initial movement of the piston from mould open to mould closed position fluid may flow from the first chamber into the second chamber and that towards the end of such movement the exit opening 56c to the second chamber is closed by the sleeve 63 thus to increase the force developed on the piston.

2. A mechanism according to claim 1, wherein said piston rod extends through the cylinder and the portion thereof which extends through said first chamber has a smaller diameter than the portion thereof which extends through said second chamber.

3. A mechanism according to claim 1, comprising a sealing ring mounted on the piston rod between the exit opening and the piston head, and arranged to sealingly engage a bore of the sleeve 63.

Fig_1

Fig_2

*Fig_3*

*Fig_4*

*Fig_5*